Europäisches Patentamt

European Patent Office

Office européen des brevets

(11) Publication number: **0 417 683 A2**

(12) **EUROPEAN PATENT APPLICATION**

(21) Application number: 90117361.7

(51) Int. Cl.5: **B60N 2/28**

(22) Date of filing: **10.09.90**

(30) Priority: **14.09.89 IT 2171489**

(43) Date of publication of application:
**20.03.91 Bulletin 91/12**

(84) Designated Contracting States:
**DE ES FR NL SE**

(71) Applicant: **MONBEBE' S.R.L.**
**Via Verdi 14**
**I-24060 Telgate (Bergamo)(IT)**

(72) Inventor: **Erli, Isidoro**
**Via Verdi 22**
**I-24060 Telgate (Bergamo)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Adjustable supporting chair, particularly for carrying children in motor vehicles.**

(57) An adjustable supporting chair, particularly for carrying children in motor vehicles, having a base (2) which can be rested on a seat (10) of a motor vehicle, and a sitting portion (3) which is associated above the base. A fastening means (6,7) extendable along a substantially vertical direction, so as to allow to vary the height of the sitting portion relatively to the support plane of the base, are provided between the sitting portion and the base.

Fig.1

Xerox Copy Centre

# ADJUSTABLE SUPPORTING CHAIR, PARTICULARLY FOR CARRYING CHILDREN IN MOTOR VEHICLES

The present invention relates to an adjustable supporting chair particularly for carrying children in motor vehicles.

As is known, legislation concerning the safety of persons inside a motor vehicle has special laws for children, who, among other things, after the first years of life require the mandatory use of chairs adapted to raise the child to such a height as to allow him to be secured correctly to the vehicle seat by means of safety belts.

Some types of chair currently being manufactured allow to vary the height of the sitting plane by inserting or removing panels of appropriate thickness under the sitting portion of the chair.

The use of such panels, to be inserted or removed according to the height of the child so as to raise him to a suitable height so that he can be retained correctly by the safety belts, has some disadvantages.

The use of removable panels to vary the height of the sitting plane in fact requires the user to store the removed panels (if any) if use for children of different height is expected. Said panels occupy considerable space, if stored in the motor vehicle, and, on the other hand, if they are not stored in the motor vehicle they may not be immediately available in case of need.

The variation of the height of the sitting plane performed by means of these panels is furthermore not very precise due to the fact that the minimum height variation is related to the thickness of a panel which, for practical purposes, are provided in a small number and therefore are relatively thick.

The aim of the present invention is to obviate the disadvantages described above by providing a supporting chair which allows to adjust the height of the sitting plane with respect to the seat of the motor vehicle without requiring the use of removable elements.

Within the scope of this aim, an object of the invention is to provide a supporting chair in which the height of the sitting plane can be adjusted with such a precision as to allow, without problems, the positioning of the child so that he can be correctly retained by conventional safety belts.

A further object of the invention is to provide a supporting chair having an easily manufactured structure with low production costs.

Not least object of the invention is to provide a supporting chair which fully complies with the safety requirements provided by the laws on the subject.

This aim, these objects and others which will become apparent hereinafter are achieved by an adjustable supporting chair, particularly for carrying children in motor vehicles, characterized in that it comprises a base which can be rested on a seat and a sitting portion which is associated above said base, a fastening means which is extendable along a substantially vertical direction, in order to vary the height of said sitting portion relatively to the support plane of said base, being provided between said sitting portion and said base.

Further characteristics and advantages of the invention will become apparent from the description of a preferred but not exclusive embodiment of a supporting chair according to the invention, illustrated only by way of non-limitative example in the accompanying drawings, wherein:

figure 1 is an exploded front view of the chair according to the invention;

figure 2 is an exploded top plan view of the chair;

figure 3 is a side elevation view of the chair;

figure 4 is a sectional view of figure 3 according to the line III-III;

figure 5 is a side elevation view of the chair arranged on the seat of a motor vehicle;

figure 6 is a schematic front elevation view of the chair in use according to the invention.

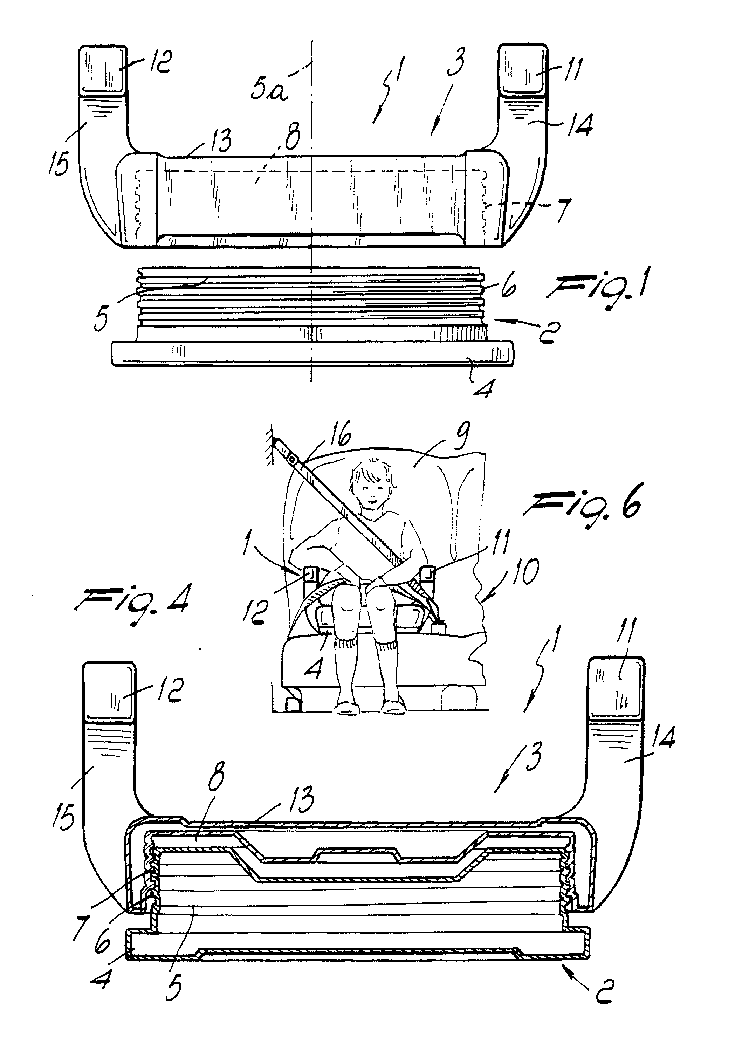

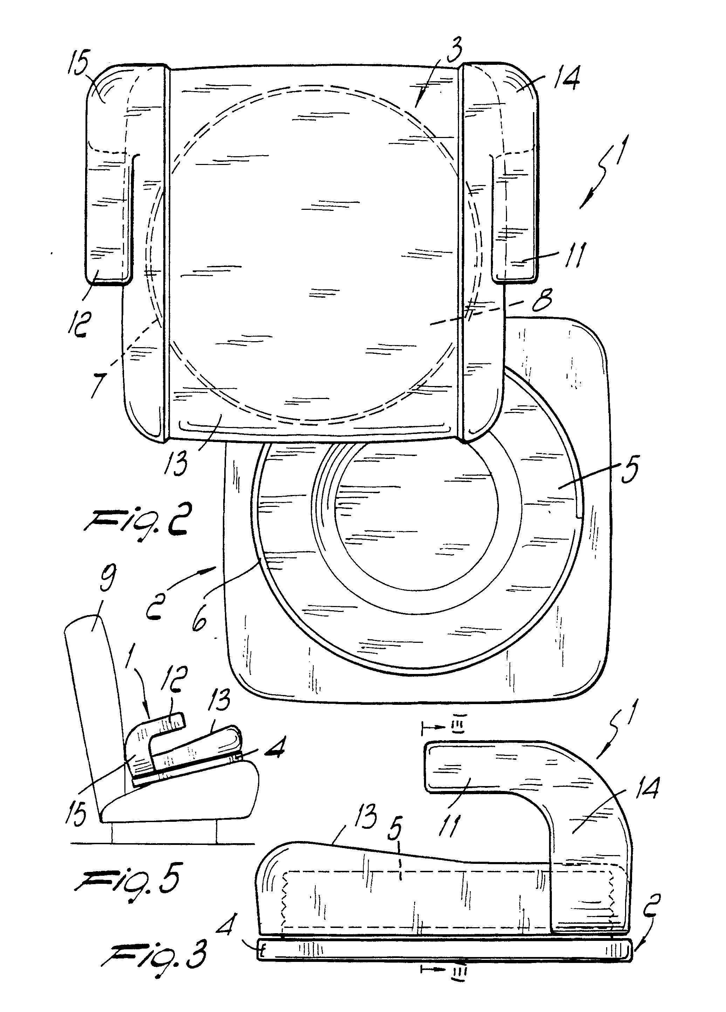

With reference to the above figures, the chair according to the invention, generally indicated by the reference numeral 1, substantially comprises a base 2 and a sitting portion 3 which is associated above said base. According to the invention, a fastening means, substantially vertically extendable, is provided between the sitting portion 3 and the base 2 in order to vary, according to the height of the child to be carried, the height of the sitting portion 3 with respect to the support plane of the base 2.

Advantageously, said extendable fastening means is constituted by a screw coupling between the sitting portion 3 and the base 2.

More particularly, the base 2 has a lower portion 4 with a polygonal plan, preferably a square one, with a protrusion 5 which extends upward on its upper base and has a substantially cylindrical configuration with a helical thread 6 on its lateral surface. The protrusion 5 is intended to couple, by means of the thread 6, with a thread 7 which is correspondingly defined on the inner lateral surface of a recess 8 which is defined on the lower side of the sitting portion 3.

A means is furthermore provided in the chair according to the invention, for locking the relative rotation between the sitting portion 3 and the base 2. More particularly, said locking means is constituted by the configuration of the base and/or of the sitting portion. In fact, as mentioned, the lower portion 4 of the base 2 has a square plan so that one of its lateral faces can be rested against the back 9 of a seat 10 of a motor vehicle, thus preventing the accidental rotation of the base 2 about the axis 5a of the protrusion 5. In the same manner, the sitting portion 3 as well, may have a configuration with a polygonal, preferably square, plan, so that said sitting portion is rested with its rear side on the back 9, preventing the accidental rotation of the sitting portion about the axis 5a, during use.

Advantageously, the sitting portion 3 has, laterally and on opposite sides, a pair of arm-rests 11 and 12 which rise above the sitting plane 13; each arm-rest has a recess, respectively 14 and 15, which is open toward the front side of the seat and in which a seat belt 16, for example of the known type with three points of coupling to the motor vehicle chassis, can pass so as to correctly secure the child and the chair to the seat 10 of the motor vehicle.

The sitting portion 3 and the base 2 can both be made of molded synthetic material, possibly covered with padded material where required, with modest production costs.

The use of the chair according to the invention is as follows.

Upon installation, according to the height of the child to be carried, the sitting portion 3 is rotated relatively to the base 2 about the axis 5a in one direction or the other so as to move the sitting plane 13 to the height which is most suitable for allowing the retention of the child by means of the belt 16. Once this adjustment has been performed, the chair is rested against the back 9 of the seat and the child can be hold to the chair and to the seat by passing the lap portion of the belt 16 in the recesses 14 and 15 and the upper portion of the belt in one of the recesses 14 or 15, according to the position of the chair on the motor vehicle seat. In this manner the child is secured to the seat of the motor vehicle and, by virtue of the rear support of the base 2 and of the sitting portion, there is no chance of accidental relative rotations between the sitting portion 3 and the base 2. In practice, by means of the chair according to the invention, the minimum height adjustment of the sitting portion 3 is equal to one quarter of the pitch of the thread 6, i.e. to the fraction of turn required to move one of the lateral faces of the lower portion 4 of the base 2 so that it rests against the back 9 of the seat 10.

In this manner it is possible to obtain a very precise height adjustment even with such a pitch of the thread 6 as to allow the use of the chair for a sufficiently wide range of variation of the child's height.

When required, it is possible to rapidly vary the height of the sitting plane 13 simply by rotating about the axis 5a the sitting portion 3 with respect to the base 2, as already described, with the belt 16 unfastened.

It should be noted that, if necessary, it is possible to obtain a minimum height of the sitting plane 13 from the seat 10 by completely removing the base 2 and using only the sitting portion 3.

In practice it has been observed that the supporting chair according to the invention fully achieves the intended aim, since it is possible to rapidly and simply vary the height of the sitting plane according to the height of the child to be carried, without requiring the use of auxiliary panels.

Another advantage is that of preventing accidental lateral movements of the child.

The supporting chair thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Adjustable supporting chair, particularly for carrying children in motor vehicles, characterized in that it comprises a base (2) which can be rested on a seat (10) and a sitting portion (3) which is associated above said base, a fastening means (6,7) which is extendable along a substantially vertical direction, in order to vary the height of said sitting portion relatively to the support plane of said base, being provided between said sitting portion and said base.

2. Adjustable supporting chair, according to claim 1, characterized in that said fastening means is constituted by a screw coupling (6,7) having a substantially vertical axis.

3. Adjustable supporting chair, according to claims 1 and 2, characterized in that said base has, on its upper side, a central protrusion (5) which is externally threaded and can be coupled in a correspondingly threaded recess (8) defined on the lower side of said sitting portion, the height of said sitting portion with respect to the support plane of said base being variable by means of the relative rotation between said sitting portion and said base about the axis of the threads of said protrusion and of said recess.

4. Adjustable supporting chair, according to one or more of the preceding claims, characterized in that it comprises means (4) for locking the relative rotation between said sitting portion and said base.

5. Adjustable supporting chair, according to one or more of the preceding claims, characterized in that said locking means is constituted by a polygonal-plan configuration of the lower portion (4) of said base with one of the lateral faces which can be rested against the back of the seat.

6. Adjustable supporting chair, according to one or more of the preceding claims, characterized in that said sitting portion has, laterally and on opposite sides, arm-rests (11,12) which rise upward from the sitting plane.

7. Adjustable supporting chair, according to one or more of the preceding claims, characterized in that each of said arm-rests (11,12) has a recess (14,15) which is open frontally for the passage of a seat belt (16) fixed to the chassis of the motor vehicle.

EP 0 417 683 A2

Fig. 1

Fig. 6

Fig. 4

5

Fig. 2

Fig. 5

Fig. 3